# FASCICULE DE BREVET EUROPEEN

(11) **EP 2 893 171 B1**
(45) Date de publication et mention de la délivrance du brevet: **28.06.2017**
(21) Numéro de dépôt: 13766610.3
(22) Date de dépôt: 03.09.2013
(51) Int. Cl.: F02C 7/32

(54) **BOITE D'ENGRENAGES DE PRISE DE MOUVEMENT SUR UNE TURBOMACHINE, COMPOSÉE D'UNE CHAÎNE CINÉMATIQUE A LIGNES D'ENGRENAGES S'ÉTENDANT DANS DES PLANS NON PARALLÈLES**
GETRIEBEEINHEIT AN EINER STRÖMUNGSMASCHINE MIT EINEM ANTRIEBSSTRANG MIT IN NICHT PARALLELE FLÄCHEN ERWEITERTEN GETRIEBELEITUNGEN
DRIVE GEARBOX ON A TURBOMACHINE, CONSISTING OF A DRIVE TRAIN WITH GEAR LINES EXTENDING INTO NON-PARALLEL PLANES

(30) Priorité: 03.09.2012 FR 1258196
(43) Date de publication de la demande: 15.07.2015
(73) Titulaire: Snecma, 75015 Paris (FR); Safran Transmission Systems, 92700 Colombes (FR)
(72) Inventeur: PELTIER, Jordanne, F-75011 Paris (FR); ARMANGE, Frantz, F-77550 Moissy-cramayel Cedex (FR); DEMOULIN, Lambert, Olivier, Marie, F-77550 Moissy-cramayel Cedex (FR); GARASSINO, Alain, Pierre, F-77550 Moissy-cramayel Cedex (FR); LLAMAS CASTRO, Nuria, F-77550 Moissy-cramayel Cedex (FR); PRUNERA-USACH, Stéphane, F-92500 Rueil Malmaison (FR); WAISSI, Bellal, F-77550 Moissy-cramayel (FR)
(74) Mandataire: Brevalex
(86) Numéro de dépôt international: PCT/FR2013/052021
(87) Numéro de publication internationale: WO 2014/033416

(56) Documents cités:
- EP-A2- 2 123 883
- EP-A2- 2 390 486
- EP-A2- 2 455 597
- WO-A1-2013/126119
- GB-A- 1 212 109
- US-A- 2 978 869

## Description

Le sujet de l'invention est une boîte d'engrenages de prise de mouvement sur une turbomachine, destinée à transmettre le mouvement originaire de la turbomachine par l'intermédiaire d'un arbre radial sortant de celle-ci, et à le transmettre à divers équipements annexes à la turbomachine, tels que des pompes, des générateurs d'électricité, etc., qui sont indispensables au fonctionnement de la turbomachine ou à d'autres appareils d'un aéronef propulsé par cette turbomachine. La transmission s'effectue par une chaîne cinématique composée d'engrenages successifs; cette chaîne est ici composée de lignes d'engrenages situées dans des plans non parallèles.

On appelle ici ligne d'engrenages un ensemble d'engrenages adjacents, engrenant en principe entre eux, dont les roues dentées sont situées dans un même plan ou dans des plans parallèles ; en d'autres termes, les axes de rotation des roues dentées sont tous parallèles (perpendiculaires à ce plan ou à ces plans parallèles), et on considère que les roues dentées engrenant directement entre elles s'étendent dans un même plan ; la ligne d'engrenages peut toutefois se poursuivre dans des plans parallèles s'il existe des roues dentées alignées le long d'un même axe de rotation ou des décalages de dentures dans un même engrenage.

La boîte d'engrenages comprend essentiellement une chaîne cinématique composée de l'ensemble des roues dentées, engrenant entre elles de façon à transmettre un mouvement, à l'intérieur d'un carter. Cette chaîne est raccordée à l'arbre radial de la turbomachine et à des arbres de prise de mouvement des équipements. La boîte d'engrenages est fixée à la turbomachine à la position voulue et les équipements sont eux-mêmes fixés à la boîte d'engrenage. Un document décrivant une boîte d'engrenage de conception connue est US-A-12/0006137. On y représente succinctement l'arbre moteur 12 de la turbomachine, l'arbre radial 14 et la boîte d'engrenages proprement dite, comprenant une chaîne cinématique composée de roues dentées 16 à denture droite dans un carter 10. L'équipement 22 est situé sur la boîte à l'opposé de la fixation à la turbomachine. Tous les axes des roues dentées 16 étant parallèles, la boîte d'engrenages de ce document antérieur comprend une ligne d'engrenages unique au sens de l'invention.

On cherche à diminuer l'encombrement de l'assemblage comprenant la boîte d'engrenages et les équipements sur la turbomachine. La conception décrite dans le document antérieur est insuffisante de ces points de vue, puisque la chaîne cinématique de la boîte est allongée dans une direction et donc encombrante.

D'une façon plus générale, les boîtes d'engrenages existantes appartiennent à deux genres différents : les monofaces, où les équipements sont placés sur une seule face de la boîte, et les double faces, où ils le sont sur deux faces opposées. Dans la première conception, la boîte doit être de grande longueur et l'encombrement angulaire autour de la turbomachine est généralement important (souvent 200°), et, dans la seconde conception, c'est l'encombrement en direction axiale qui est important.

Le sujet de l'invention est une boîte d'engrenages améliorée sous ces différents aspects, et qui offre en particulier une grande liberté de conception, apte à amener une réduction de l'encombrement de l'assemblage composé de la boîte et de l'ensemble d'équipements qu'elle porte.

De façon très générale, on renonce à la conception traditionnelle où la chaîne cinématique est composée d'une seule ligne d'engrenages s'étendant dans un plan, éventuellement dans une seule direction, ou dans des plans parallèles, comme c'est le cas dans le document US-A-12/0006137, ou encore dans des branches parallèles et dans des plans sécants comme dans EP-2 455 597-A.

WO 2013/126119 A1 est un art antérieur selon l'Article 54(3) de la CBE.

Sous une forme générale, l'invention est relative à une boîte d'engrenages à fixer à une turbomachine pour entraîner au moins un équipement annexe à la turbomachine, conforme à la première revendication.

La construction de la chaîne cinématique en plusieurs lignes d'engrenages situées dans des plans non parallèles permet de disposer d'une boîte d'engrenages même de grandes dimensions entièrement à proximité du carter de la turbomachine, sans encombrement excessif ni dans la direction radiale ni dans la direction axiale ni dans la direction angulaire, la boîte n'étant pas rectiligne. On dispose de plus d'un grand choix de faces de la boîte d'engrenages, s'étendant dans des directions très différentes, pour y placer les équipements, ce qui contribue aussi à limiter l'encombrement de l'assemblage.

Une telle réalisation illustre particulièrement combien l'encombrement de la boîte d'engrenages peut être limité avec l'invention : l'extension axiale de la boîte d'engrenages est réduite grâce à la division de la chaîne cinématique en deux lignes pouvant s'étendre de part et d'autre de la turbomachine, alors que la branche intermédiaire a elle-même un encombrement axial très faible, et que son encombrement angulaire est avantageusement égal ou inférieur à un demi-tour, ce qui facilite beaucoup l'installation de la boîte d'engrenages sur la turbomachine, alors que les boîtes d'engrenages monofaces connues ont souvent une extension angulaire plus importante qui rend le montage contraignant.

Dans une autre conception, qui exploite aussi la division de la chaîne cinématique en deux lignes s'étendant dans des directions essentiellement parallèles, ces deux lignes appartiennent toutefois à des plans sécants, et la chaîne cinématique présente une portion de jonction à des extrémités longitudinales des lignes d'engrenages ; ces dernières sont logées dans des branches respectives du carter qui sont jointes entre elles en une arête et ont ensemble une section en vé suivant des coupes perpendiculaires à une direction d'extension principale de la boîte d'engrenages.

L'encombrement angulaire de la boîte d'engrenages est ici encore réduit; au prix d'un encombrement axial modéré, l'on dispose d'un carter ayant une grande superficie de placement des équipements, sur des faces ayant des orientations très différentes les unes des autres.

Les lignes d'engrenages successives composant la chaîne cinématique peuvent être réunies par des pignons coniques aux extrémités de ces lignes d'engrenages et qui définissent des engrenages de jonction à axes non parallèles, pouvant être concourants mais pas nécessairement.

Certaines réalisations de l'invention seront maintenant décrites au moyen des figures suivantes ; il est clair que d'autres modes de réalisation sont possibles et que cette description est purement illustrative :
- les figures 1, 2, 3 et 4 illustrent une réalisation de l'invention ;
- et la figure 5, un aménagement possible pour cette réalisation ou d'autres.

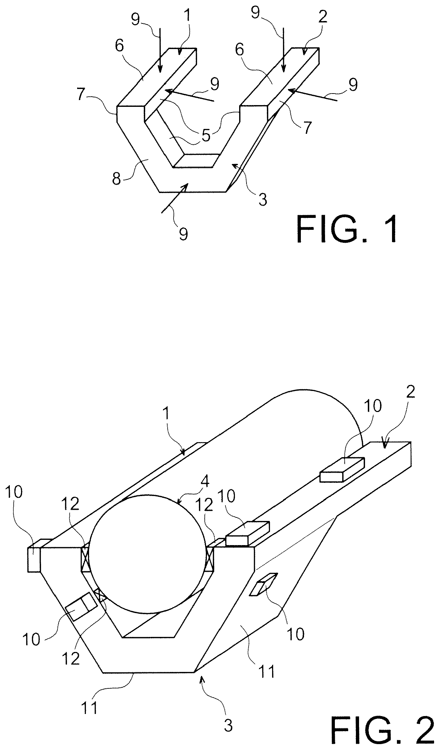

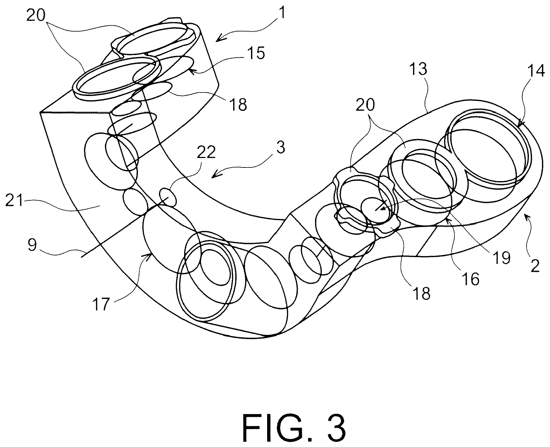

Une réalisation de l'invention est décrite au moyen des figures. La boîte d'engrenages a la forme générale représentée à la figure 1, avec une forme tridimensionnelle comprenant deux branches extrêmes 1 et 2 essentiellement parallèles et rectilignes (une légère courbure, représentée à la Figure 3, étant toutefois possible) et une branche intermédiaire 3 essentiellement en portion de cercle reliant les précédentes et qui leur est essentiellement perpendiculaire. La figure 2 illustre que cette boîte d'engrenages peut être avantageusement placée autour d'une turbomachine 4, par exemple à l'endroit d'un corps à haute pression de celle-ci, en plaçant les branches extrêmes 1 et 2 en direction axiale de ladite turbomachine, à des génératrices diamétralement opposées, la branche intermédiaire 3 côtoyant alors aussi la turbomachine 4 en faisant essentiellement un demi-tour autour d'elle, ou moins. La boîte d'engrenages pourrait comprendre un nombre différent de branches s'étendant dans l'axe de la turbomachine 4, une seule par exemple, ou plus de deux, et la branche intermédiaire 3 peut avoir une extension angulaire plus petite qu'un demi-tour approximatif. On dispose alors d'un large choix pour le lieu de la prise de mouvement d'entraînement de la turbomachine 4, qui peut se faire directement à partir d'un arbre radial classique appartenant à la turbomachine 4, ou par l'intermédiaire d'un arbre intermédiaire appartenant à un boîtier séparé et engrenant avec l'arbre radial. Un arbre radial pourra ainsi s'étendre jusqu'à une face interne 5 (dirigée vers la turbomachine 4) de l'une quelconque des branches 1, 2 et 3, alors qu'un arbre intermédiaire pourra s'étendre jusqu'à une des faces extérieures d'une des branches 1 à 3. Il pourra s'agir notamment d'une des faces supérieures 6 (sensiblement dans le plan du secteur de la turbomachine 4) pour les branches extrêmes 1 et 2, une des faces périphériques 7 (dirigées radialement vers l'extérieur) pour les mêmes branches, ou une face frontale 8 (dirigée axialement à l'opposé des branches extrêmes 1 et 2) de la branche intermédiaire 3. Certaines possibilités de positions de l'arbre d'entraînement (radial ou intermédiaire) sont indiquées par la référence 9, à la figure 1.

Les équipements 10 peuvent être montés eux-mêmes sur les faces supérieures 6, périphériques 7 et axiales 8 opposées, ainsi que sur des faces radialement externes 11 de la branche intermédiaire 3. On dispose encore d'un choix important pour la fixation de la boîte d'engrenages à la turbomachine 4, qui peut s'effectuer par des boulonnages de points de fixation 12 situés sur le carter 13, en utilisant éventuellement des cales ou d'autres supports intermédiaires entre la turbomachine 4 et, par exemple, certaines des faces internes 5. Les équipements 10 sont fixés au carter 13 par d'autres points de fixation 12.

Cette boîte d'engrenages donne donc d'une façon générale un très grand choix dans les possibilités d'aménagement ainsi que la possibilité d'installer un grand nombre d'équipements 10, tout en gardant un encombrement modéré dans toutes les directions (axiale, radiale et angulaire) de la turbomachine 4.

On passe maintenant à la description plus détaillée de cette boîte d'engrenages. La figure 3 montre qu'elle est composée essentiellement d'un carter 13 définissant le contour des trois branches 1, 2 et 3, et d'une chaîne cinématique 14 contenue dans le carter 13 et dans laquelle on peut distinguer trois lignes d'engrenages 15, 16 et 17, respectivement logées dans une branche 1, 2 et 3 respective. Chacune d'elles comprend des roues dentées 18 généralement à denture droite engrenant entre elles pour former des engrenages droits, les axes 19 de certaines de ces roues dentées 18 étant exploités pour entraîner en rotation les parties mobiles des équipements 10, en traversant des ouvertures 20 du carter 13. Les axes 19 sont tous parallèles à l'intérieur d'une même ligne d'engrenages 15, 16 ou 17, mais ont des directions différentes d'une ligne d'engrenages 15, 16 ou 17 à une autre. Le nombre de roues dentées 18, leurs diamètres ainsi que les positions des ouvertures 20 définissant les axes 19 moteurs des équipements 10 peuvent bien entendu être choisis assez librement, selon les vitesses de rotation qu'on veut transmettre et les positions des équipements 10. Une ouverture particulière 21 est destinée à l'entrée de l'arbre d'entraînement 9, qui comprend encore un pignon d'attaque 22 engrenant avec l'une quelconque des roues dentées 18. Le pignon d'attaque 22 est adjacent à la chaîne cinématique 14, ce qui signifie que celle-ci resterait continue en l'absence de celui-là. Il serait toutefois possible que le pignon d'attaque soit une roue dentée appartenant à la chaîne cinématique elle-même.

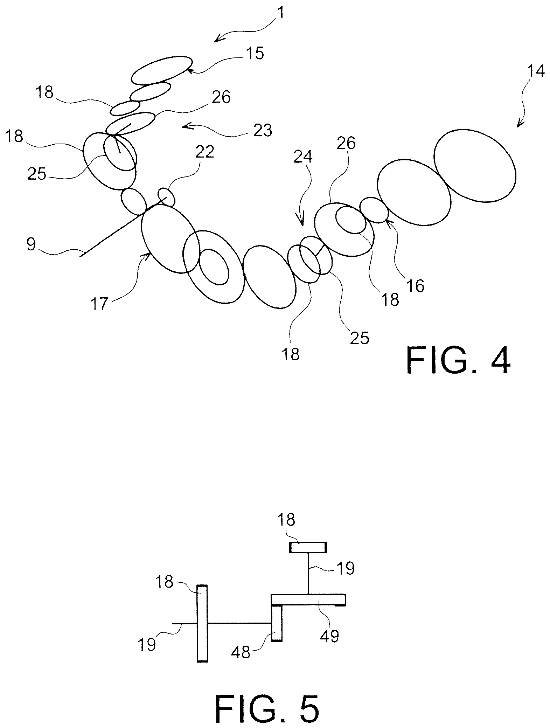

La figure 4 représente la chaîne cinématique 14 en isolé. La liaison entre les trois lignes d'engrenages 15, 16 et 17 se fait par des engrenages de jonction 23 et 24 à axes concourants ou plus généralement non parallèles. Chacun d'eux est composé d'un premier pignon conique 25, solidaire et coaxial à une roue dentée 18 d'extrémité de la ligne d'engrenages 17, et d'un second pignon conique 26, de même solidaire et coaxial à une roue dentée 18, d'extrémité d'une des lignes d'engrenages 15 ou 16. Ces engrenages de jonction 23 et 24 assurent donc la continuité de la chaîne cinématique 14 et la faculté de la mouvoir entièrement par le seul pignon d'attaque 22. Ils permettent aussi d'orienter chacune des lignes d'engrenages 15, 16 et 17 dans la direction de la branche 1, 2 ou 3 respective et dans des plans non parallèles.

Une conception équivalente du point de vue cinématique consisterait à remplacer les pignons coniques 25 et 26 par un pignon droit 48 et une couronne dentée 49 sur un plan, ce que représente la figure 5, sans que d'autres détails de la réalisation soient modifiés.

Les lignes d'engrenages 15 et 16 s'étendant dans les branches extrêmes 1 et 2 d'extensions essentiellement axiales ont également des directions d'extension à peu près axiales et s'étendent dans des plans essentiellement longitudinaux par rapport à la turbomachine 4, alors que la ligne d'engrenages 17 logée dans la branche intermédiaire 3 du carter a une direction d'extension essentiellement angulaire comme elle et appartient à un plan essentiellement transversal de la turbomachine 4.

## Revendications

1. Boîte d'engrenages à fixer à une turbomachine (4) pour entraîner au moins un équipement (10) annexe à la turbomachine, comprenant un carter (13), une chaîne cinématique (24) interne au carter et comprenant une série d'engrenages, ainsi qu'un organe de prise de mouvement destiné à engrener avec un arbre de transmission de la turbomachine, le carter comprenant des points de fixation (12) à la turbomachine et à l'équipement, où la chaîne cinématique comprend trois lignes d'engrenages situées dans des plans non parallèles et unies entre elles par des engrenages de jonction à des interfaces de jonction, composés chacun d'une paire de roues dentées à axes non parallèles, dont, de façon caractéristique, deux lignes extrêmes (15, 16) logées dans deux branches de carter extrêmes (1, 2) ayant chacune une direction d'extension principale dans une direction essentiellement axiale de la turbomachine quand la boîte est fixée à la turbomachine, et une autre ligne (17) logée dans une branche de carter intermédiaire (3) joignant lesdites branches extrêmes, s'étendant essentiellement dans une direction angulaire de la turbomachine, sur une portion de cercle, essentiellement perpendiculaire auxdites branches extrêmes entre lesdites branches extrêmes et qui entoure une portion de circonférence de la turbomachine quand la boîte est fixée à la turbomachine, les branches extrêmes (1, 2) étant séparées l'une de l'autre.

2. Boîte d'engrenages selon la revendication 1, **caractérisée en ce que** les lignes extrêmes s'étendent à des génératrices diamétralement opposées de la turbomachine (4).

3. Boîte d'engrenages selon l'une quelconque des revendications précédentes, **caractérisée en ce que** la chaîne cinématique est continue et comporte une roue dentée engrenant avec un pignon d'attaque (22) appartenant à l'arbre de transmission, le pignon d'attaque étant adjacent à la chaîne cinématique.

4. Boîte d'engrenages selon l'une quelconque des revendications précédentes, **caractérisée en ce que** le pignon d'attaque appartient à la chaîne cinématique.

5. Boîte d'engrenages selon l'une quelconque des revendications précédentes, **caractérisée en ce que** les engrenages de jonction à axes non parallèles sont composés de pignons coniques coaxiaux à d'autres roues dentées de la chaîne cinématique.

## Patentansprüche

1. Getriebekasten, der an einer Turbomaschine (4) zu befestigen ist, um wenigstens eine an die Turbomaschine angebaute Einrichtung (10) anzutreiben, umfassend ein Gehäuse (13), eine kinematische Kette (24) innerhalb des Gehäuses, die eine Reihe von Getrieben umfasst, sowie ein Abtriebsorgan, das dazu bestimmt ist, mit einer Übertragungswelle der Turbomaschine in Eingriff zu sein, wobei das Gehäuse Stellen zur Befestigung (12) an der Turbomaschine und an der Einrichtung umfasst, wobei die kinematische Kette drei Getriebelinien umfasst, welche in nicht parallelen Ebenen gelegen sind und durch Verbindungsgetriebe mit Verbindungsschnittstellen, die jeweils aus einem Paar von Zahnrädern mit nicht parallelen Achsen bestehen, untereinander verbunden sind, darunter in kennzeichnender Weise zwei äußere Linien (15, 16), die in zwei äußeren Gehäuseschenkeln (1, 2) mit jeweils einer Haupterstreckungsrichtung in einer im Wesentlichen axialen Richtung der Turbomaschine, wenn der Kasten an der Turbomaschine befestigt ist, aufgenommen sind, und eine weitere Linie (17), die in einem die äußeren Schenkel verbindenden Zwischengehäuseschenkel (3) aufgenommen ist, welcher sich im Wesentlichen in einer winkeligen Richtung der Turbomaschine über einen Kreisabschnitt, im Wesentlichen senkrecht zu den äußeren Schenkeln, zwischen den äußeren Schenkeln erstreckt und der einen Umfangsabschnitt der Turbomaschine umschließt, wenn der Kasten an der Turbomaschine befestigt ist, wobei die äußeren Schenkel (1, 2) voneinander getrennt sind.

2. Getriebekasten nach Anspruch 1, **dadurch gekennzeichnet, dass** sich die äußeren Linien unter diametral gegenüberliegenden Erzeugenden der Turbomaschine (4) erstrecken.

3. Getriebekasten nach einem der vorhergehenden Ansprüche, **dadurch gekennzeichnet, dass** die kinematische Kette durchgehend ist und ein Zahnrad umfasst, das mit einem Antriebsritzel (22), welches zu der Übertragungswelle gehört, in Eingriff ist, wobei das Antriebsritzel zu der kinematischen Kette benachbart ist.

4. Getriebekasten nach einem der vorhergehenden Ansprüche, **dadurch gekennzeichnet, dass** das Antriebsritzel zu der kinematischen Kette gehört.

5. Getriebekasten nach einem der vorhergehenden Ansprüche, **dadurch gekennzeichnet, dass** die Verbindungsgetriebe mit nicht parallelen Achsen aus Kegelrädern bestehen, die zu weiteren Zahnrädern der kinematischen Kette koaxial sind.

## Claims

1. Gearbox to be fixed to a turbomachine (4) in order to drive at least one piece of equipment (10) annexed to the turbomachine, comprising a casing (13), a drive train (24) internal to the casing and comprising a series of gears, as well as a drive member intended to mesh with a transmission shaft of the turbomachine, with the casing comprising fastening points (12) to the turbomachine and to the equipment, wherein the drive train comprises three gear lines located in non-parallel planes and connected together by junction gears to junction interfaces, comprised each of a pair of gear wheels with non-parallel axes, of which, characteristically, two end lines (15, 16) housed in two end casing branches (1, 2) that have each a direction of main extension in a substantially axial direction of the turbomachine when the box is fixed to the turbomachine, and another line (17) housed in an intermediate casing branch (3) joining said end branches, extending substantially in an angular direction of the turbomachine, in a portion of a circle, substantially perpendicular to the end branches between said end branches and which surrounds a portion of circumference of the turbomachine when the box is fixed to the turbomachine, the end branches (1, 2) being separate from each other.

2. Gearbox according to claim 1, **characterised in that** the end lines extend to diametrically opposite generatrices of the turbomachine (4).

3. Gearbox as claimed in any preceding claim, **characterised in that** the drive train is continuous and comprises a gear wheel meshing with a drive pinion (22) that belongs to the transmission shaft, with the drive pinion being adjacent to the drive train.

4. Gearbox as claimed in any preceding claim, **characterised in that** the drive pinion belongs to the drive train.

5. Gearbox as claimed in any preceding claim, **characterised in that** the junction gears with non-parallel axes are comprised of conical pinions that are coaxial with other gear wheels of the drive train.
